**Europäisches Patentamt**

**European Patent Office**

**Office européen des brevets**

(19)

(11) Publication number : **0 532 449 A2**

# (12) EUROPEAN PATENT APPLICATION

(21) Application number : **92630078.1**

(22) Date of filing : **02.09.92**

(51) Int. Cl.⁵ : **H04N 1/46**

(30) Priority : **03.09.91 IL 99375**

(43) Date of publication of application :
**17.03.93 Bulletin 93/11**

(84) Designated Contracting States :
**BE DE ES FR GB GR IT NL**

(71) Applicant : **SCITEX CORPORATION LTD.**
**Hamada Street**
**46 733 Herzlia Bet (IL)**

(72) Inventor : **Barak, Avital**
**7 Savyon Street**
**44 813 Oranit (IL)**
Inventor : **Yosefi, Hanan**
**73 Rothschild Street**
**75 202 Rishon Lezion (IL)**

(74) Representative : **Waxweiler, Jean et al**
**OFFICE DENNEMEYER & ASSOCIATES Sàrl,**
**P.O. Box 1502**
**L-1015 Luxembourg (LU)**

(54) **Method of manipulating composite color images.**

(57)   A method of manipulating a composite color image defined by a plurality of color separation files, by applying a brush to selected points of the composite color image to be manipulated according to a preselected color manipulation function, and modifying the respective point in each color separation file according to the preselected function, and also according to inputted characteristics of the brush. The preselected function includes, for each point of the composite color image, the color manipulation functions of each color separation file and the influences of each such file on the remaining files. Each color separation file is modified according to the inputs from all the color separation files, as well as from the preselected manipulation function and the inputted brush characteristics.

FIG. 1

EP 0 532 449 A2

The present invention relates to a method for manipulating composite color images, and particularly to manipulating such images by means of a "brush function".

Composite color images, defined by a plurality of color separation files, may be processed by a "brush function", wherein a dynamic area of the image, defined by the "brush" size, shape and coordinates, is applied to selected points of the composite color image to manipulate such points according to a preselected color manipulation function. One example of such a color manipulation function is a "copy" function, wherein each color separation of each image element is copied; such a brush is called a "copy brush", or a "clone". Another preselectable color manipulation function is a "TINT-Brush" function, in which all image elements touched by the "brush" in the color separation layers are changed. For example, when the color separations are according to the primary subtractive colors, C (cyan), M (magenta), Y (yellow) and K (black), all image elements touched by the "brush" are changed to color value $B = (C2,M2,Y2,K2)$.

Color manipulation by a "brush" permits fine control over changes in area, percentage of application, and visual blending. Thus, when a brush is used, the "brush" is applied interactively to the image displayed on a screen, and the requested function is performed on the image elements according to the characteristics of the "brush". The brush consists of a matrix of elements, BM where the brush matrix has a number of characteristics including:
size, transparency, curve/profile, noise and shape. These characteristics of a brush are defined as follows:

SHAPE - the contour of the "brush". Options are:
circle, rectangle, line, user definable, etc.

SIZE - a parameter defining the height and width of the "brush" matrix. A range of sizes can be set by the operator initially. This size may be influenced by the input from a pressure sensitive stylus.

TRANSPARENCY - a parameter defining the percentage of the influence of the function on the image element it touches.

CURVE/PROFILE - a curve or function describing the "softness" of the "brush". Usually the "brush" works at a maximumn percentage at its center, and then decreases towards the edges.

NOISE - a parameter controlling the level and behavior of an artificial noise added to the brushed area on the image to maintain the original grain of the image.

These characteristics influence the application of the function via the "brush" element B(n,m) touching the image element P(i,j).

In the known "brush" techniques, although the visual effect on the display monitor shows a change to the composite image element, the function processing is performed on each individual color separation, according to predetermined parameters set by the operator, individually for each separation; and the output of each separation depends only on the input of that separation. Thus, for each image element, the new element, P'(ij) is defined in the four color separations as follows:

(a) new P'.Cyan(i,j)=Function [old P.Cyan(i,j)];
(b) new P'.Magenta(i,j)=Function [old P.Magenta(i,j)];
(c) new P'.Yellow(i,j)=Function [old P.Yellow(i,j)]; and (d) new P'.Black(i,j)=Function [old P.Black(i,j)].

Accordingly, under existing "brush" techniques of applying a color manipulation function, each color separation of each image element is processed separately, and the values of one separation do not influence, and are not dependent on, the values of any of the other color separations for the respective image element.

Other color image processing techniques are known operating on geometrically specified image elements, or on all of the image elements. Such techniques are known as "mask" and "global" processing techniques, respectively. Thus, in a "global" color manipulation, there is an unrestricted performance of the function; that is, the function will be applied to all the image elements in the image. In a "mask" color manipulation, an "on/off" layer is provided restricting the areas manipulated by the function, so that the function will influence only the image elements under the areas (called transparent areas) of the mask. In color manipulation according to the "global" mode, the output value for each separation of each image element is computed according to the input values of all the separations; in color manipulation via a mask, the output value for each separation of each image element is computed according to the input values of all the separations and the transparency of the mask. That is, there is cross-influence between separations in the existing techniques of applying a color manipulation function when operating according to a global mode or via a mask.

However, in the existing "global" or "mask" method of applying color functions, there is not the same fineless of control over changes in area (per brush size and shape), or percentage of application (per brush profile and transparency), or visual blending (per brush-introduced noise), as in the "brush" method of applying manipulation functions.

According to the present invention, there is provided a method of manipulating a composite color image defined by a plurality of color separation files, by applying a brush to selected points of the composite color image to be manipulated according to a preselected color manipulation function, and modifying the respective point in each color separation file according to the preselected color manipulation function, and also according to inputted characteristics of the brush; characterized in that the preselected color manipulation function includes, for each point of the composite color image, the color manipulation functions of each color separation file and the influences of each color separation file on the remaining color separation files; and that each color separation file is modified according to the inputs from all the color separation files, as well as from the preselected manipulation function and the inputted brush characteristics.

It will thus be seen that the method of the present invention provides cross-influences between separations. That is, the color manipulations of each element of the composite color image takes into account all of the separations, so that the output of each separation depends on all of the input separations. Thus, for each image element of the composite color image, $P'(i,j)$ consists of:

(a) new $P'.Cyan(i,j)=$Function [old $P.Cyan(i,j)$, old $P.Magenta(i,j)$, old $P.Yellow(i,j)$, old $P.Black(i,j)$];

(b) new $P'.Magenta(i,j)=$Function [old $P.Cyan(i,j)$, old $P.Magenta(i,j)$, old $P.Yellow(i,j)$, old $P.Black(i,j)$];

(c) new $P'.Yellow(i,j)=$Function [old $P.Cyan(i,j)$, old $P.Magenta(i,j)$, old $P.Yellow(i,j)$, old $P.Black(i,j)$]; and

(d) new $P'.Black(i,j)=$Function [old $P.Cyan(i,j)$, old $P.Magenta(i,j)$, old $P.Yellow(i,j)$, old $P.Black(i,j)$].

The invention thus provides a new technique for applying a color manipulation function by a brush with cross-influence between separations.

By thus applying color functions with cross-influence between separations, the novel method of the present invention enables much finer control over changes in area (via brush size and shape), percentage of application (via brush profile and transparency), and visual blending (via noise), than the existing "global" or "mask" methods of applying color functions with cross-influence between separations.

For example, a color change function by a "brush" may be used for changing all image elements touched by the "brush" with color value $A = (C1,M1,Y1,K1)$ to color value $B = (C2,M2,Y2,K2)$, where the color values "A" and "B" are actually ranges of colors. The colors "closest" to color A in a predefined color space will be changed to colors "closest" to color B; color values "furthest" from color A will not be changed at all; and the intermediate colors will be changed according to their "distance" from A in the color space.

While the invention is herein described with respect to color spaces defined according to the primary subtractive colors C,M,Y and K, it will be appreciated that the invention could advantageously used with other color spaces, including: the primary additive colors R,G and B; the color space LHS (Luminance, Hue and Saturation); and the CIE, CIELAB, etc., standard color spaces.

Fig. 1 illustrates one form of apparatus constructed to operate in accordance with the method of the present invention;

Fig. 2 is a flow chart illustrating one example of operation of the system of Fig. 1;

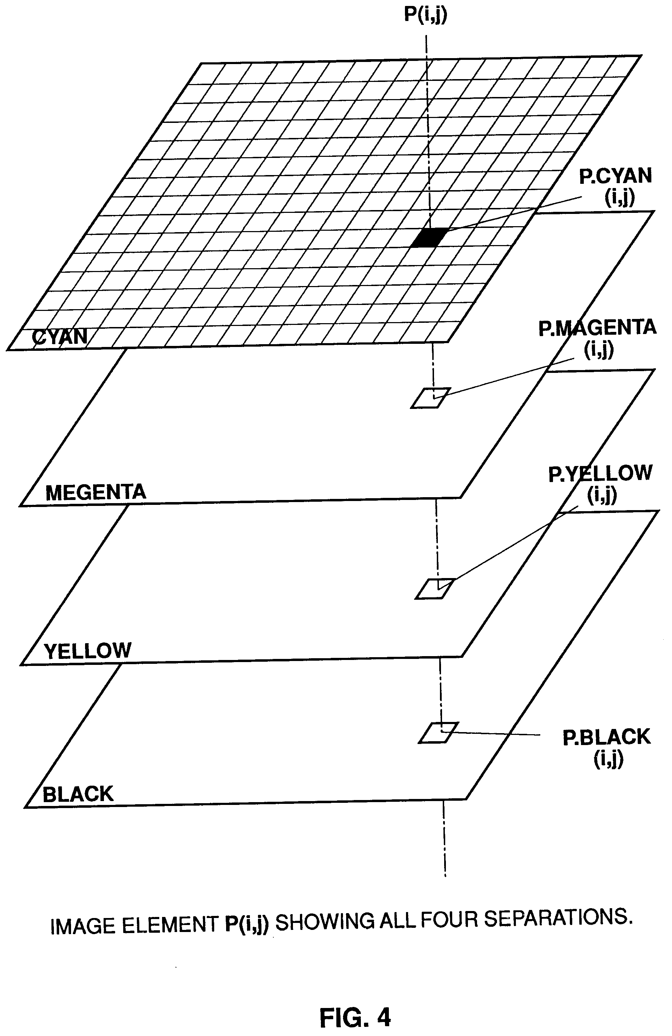

Figs. 3-7 are diagrams helpful in explaining the operation of the flow chart of Fig. 2;

Fig. 8 illustrates an example of a composite color image that may be processed in accordance with the apparatus of Figs. 1 and 2;

Fig. 8a illustrates the composite color image of Fig. 8 processed according to a function wherein the colors in the area touched by the "brush" are changed from the original color of each picture element to a gray scale (black to white); and

Fig. 8b illustrates the composite color image of Fig. 8 processed according to another function wherein the color in the areas touched by the brush are changed according to different rules.

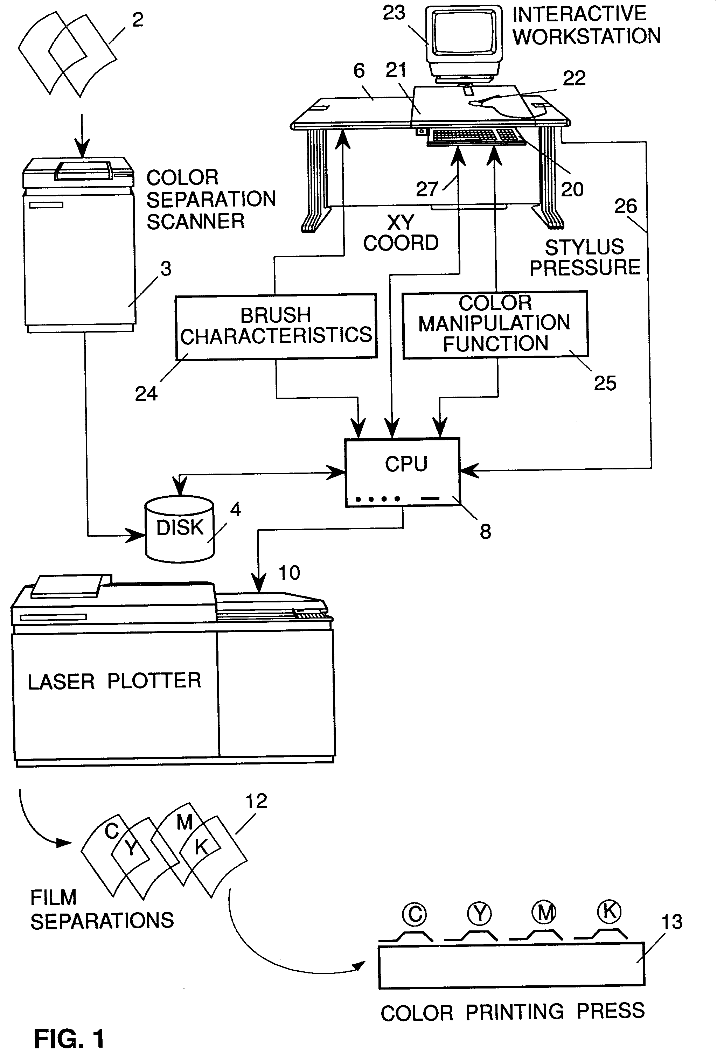

Fig. 1 illustrates a typical pre-press system, wherein color slides or reflective pictures 2 are scanned by a color separation scanner 3 which outputs four sets of data, each defining a process print ink separation according to the primary subtractive colors C,M,Y and K. The data from scanner 3 is recorded on a disc 4 for further color manipulation by an interactive work station 6 via a central processing unit 8. The result is a set of four data files. These are outputted to a laser plotter 10 which produces four separation films 12 used to create plates for an offset printing plate 13.

The interactive work station 6 includes a keyboard 20 for inputting data, a tablet 21 for receiving the composite color image to be processed, and a stylus 22 serving as the "brush" for manipulating or processing the image on tablet 21. Work station 6 also includes a monitor 23 to permit the user to view the image as it is being interactively manipulated by the stylus 22 according to the characteristics of the brush, and also according to the color function to be applied, both as inputted via a keyboard 20 or via other input means, e.g., a "mouse", joystick, four-directions (arrows) keyboard, or a pre-programmed set of coordinates.

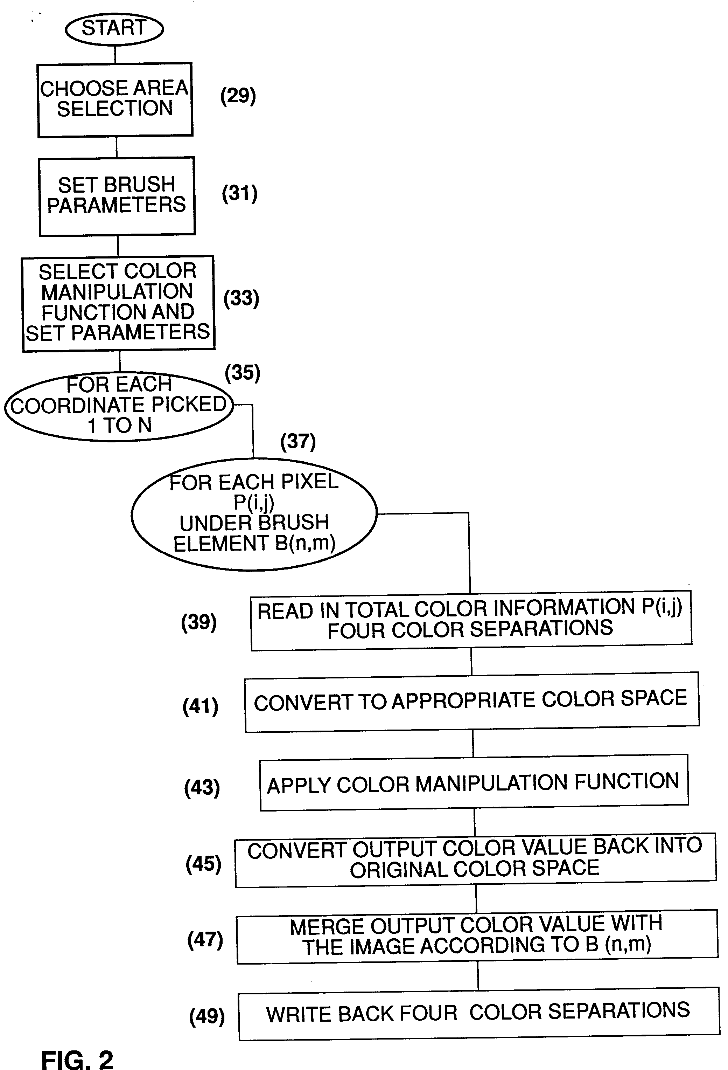

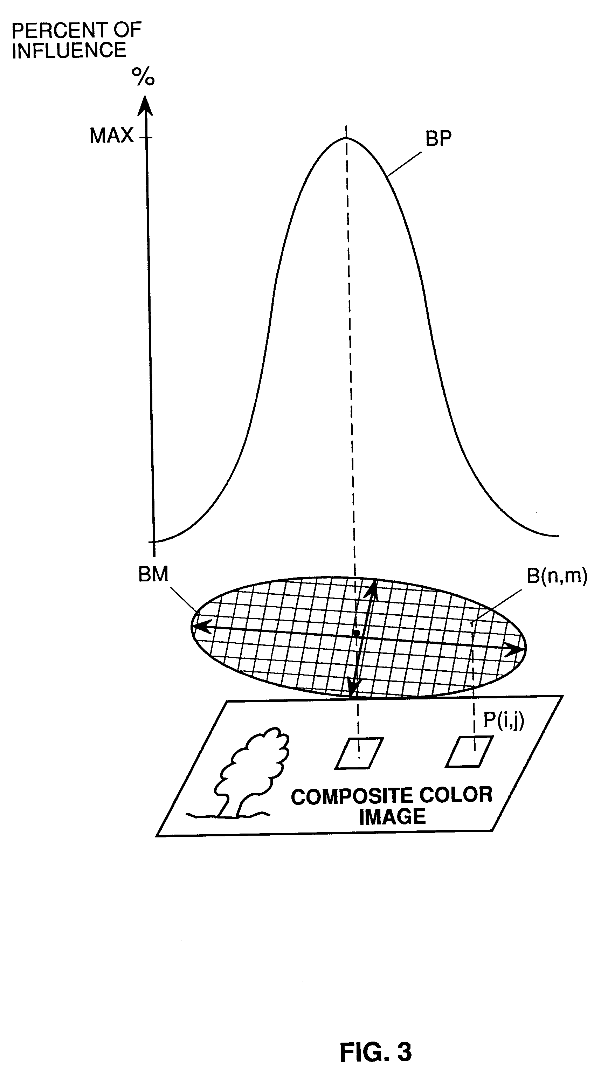

The "brush" is constituted of a matrix of brush elements, indicated as B(n,m) in Fig. 3. Each element of the "brush" matrix has the above-described characteristics, e.g., transparency, profile, noise, etc., that influence the application of the color function 25 via the brush to the image element, shown at $P(i,j)$, in Fig. 2, touched by the brush matrix BM. Also, as described earlier, the transparency characteristic defines the percentage of the influence of the function on the image element it touches; and the profile (or curve) characteristic defines the "softness" of the brush. As shown by the curve BP in Fig. 2, the brush usually works at maximum influence at its center, and decreases towards the edges.

The CPU 8 also receives outputs from the interactive work station 6, particularly from the tablet 21 and stylus 22, relating to the stylus pressure inputted via line 26, and also the stylus X,Y coordinates inputted via line 27.

The color manipulation functions, indicated by block 25 in Fig. 1, take into account all the separations and the cross-influences between separations, for each of the four color separations C,M,Y,K. Thus, as shown in Fig. 3, each image element, P(i,j) is identified by an image element in each of the four color separations, namely:

P.Cyan(i,j); P.Magenta(i,j), P.Yellow(i,j); and P.Black(i,j). Thus, as described earlier, for each image element, the new image element, P'(i,j) would consist of:

(a) new P'.Cyan(i,j)=Function [old P.Cyan(i,j), old P.Magenta(i,j), old P.Yellow(i,j), old P.Black(i,j)];

(b) new P'.Magenta(i,j)=Function [old P.Cyan(i,j), old P.Magenta(i,j), old P.Yellow(i,j), old P.Black(i,j)];

(c) new P'.Yellow(i,j)=Function [old P.Cyan(i,j), old P.Magenta(i,j), old P.Yellow(i,j), old P.Black(i,j)]; and

(d) new P'.Black(i,j)=Function [old P.Cyan(i,j), old P.Magenta(i,j), old P.Yellow(i,j), old P.Black(i,j)].

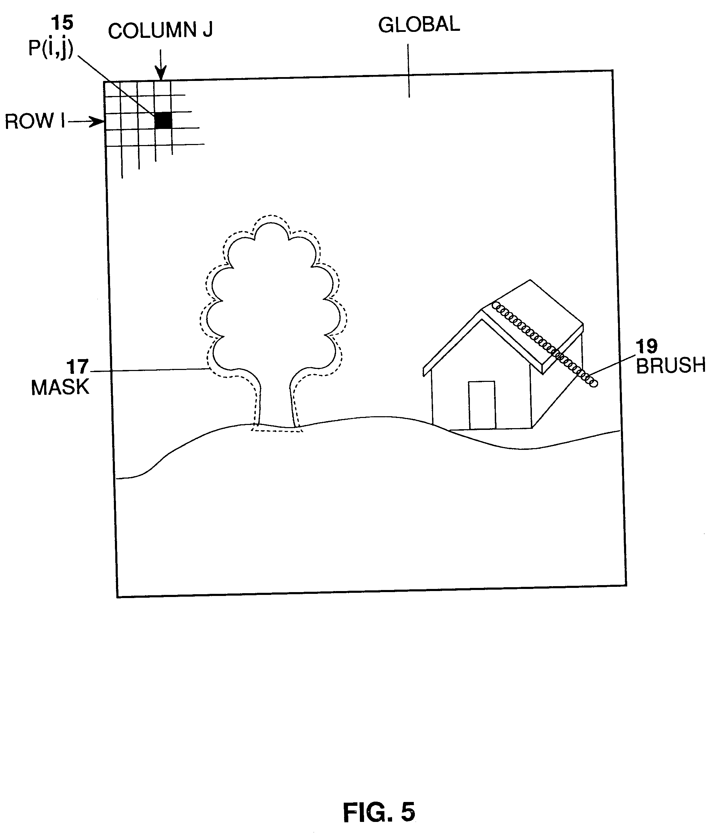

Fig. 5 illustrates a typical "brush" application flow diagram for operating the system of Fig. 1.

The operator first decides to work of the image either globally or via a mask (block 29). The operator then sets the brush parameters, namely the characteristics of the brush such as size, transparency, profile, noise, shape, etc. (block 31). The operator then selects the color manipulation function to be applied which, as described above, includes cross-influences between separations, and sets the parameters for the application (block 33). For example, the operator may select a color Change Function, and if so, the operator chooses the source and target colors. In a color change function, all the image elements in the range of color A are changed to color B, as described /earlier.

The operator then begins "brushing", by moving the stylus 22, or other input device, across the composite color image on the tablet 21 (block 35), and for each coordinate touched by the stylus (defined by the center of its matrix BM, Fig. 2), the CPU 8 performs the following operations (block 37):

(a) it reads in all four color separation values: P.Cyan(i,j), P.Magenta(i,j), P.Yellow(i,j), P.Black(i,j), 5 as indicated by block 39;

(b) it converts the four color separation values into the most appropriate color Space for the requested computation (e.g., it converts CMYK to LHS), as indicated by block 41;

(c) it applies the color manipulation fuction, e.g.,

color change function, to the total color value of the image element in all the separations, as indicated by block 43;

(d) it converts the output image element color value back to the original color space (e.g., LHS to CMYK), as indicated by block 45;

(e) it merges the output color value with the original input color value according to the "brush" characteristics, B(n,m), which define the percentage of the influence of the function on the image element, as indicated by block 47), to produce the new image element value new P'(i,j) = input P(i,j) + B(n,m) * (output P(i,j) - input P(i,j));

(f) and it writes back all four color separation values, as indicated by block 49.

An example of a color manipulation function selected in step 33 would be a "Color Change Function - Brush", which changes all the image elements touched by the "brush" with color value A defined by color separations C1,M1,Y1,K1 to color value B defined by color separations C2,M2,Y2,K2, where the color values A and B are actually ranges of colors. In this example, the colors "closest" to color A in the predefined color space, as selected in step 29, will be changed to colors "closest" to color B, whereas color values "furthest" from color A will not be changed at all, and intermediate colors will be changed according to their "distance" from A in the selected color space. This type of color manipulation computes the output value of each separation according to all the input separations, and the characteristics of the "brush".

Another example of a color manipulation function that may be selected in step 33 is a Matrix function. When this function is selected, for each image element there would be computed the output value of each separation by multiplying the values of the four input separations with a four-by-four matrix. One such known matrix will compute the Black and White values of an image element according to the four input separtion values of that element.

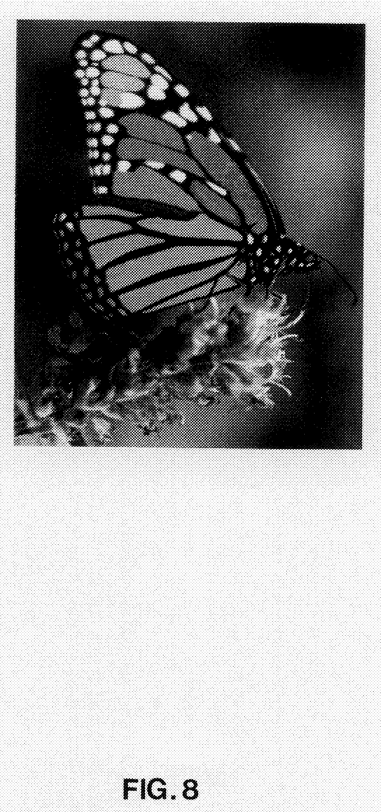

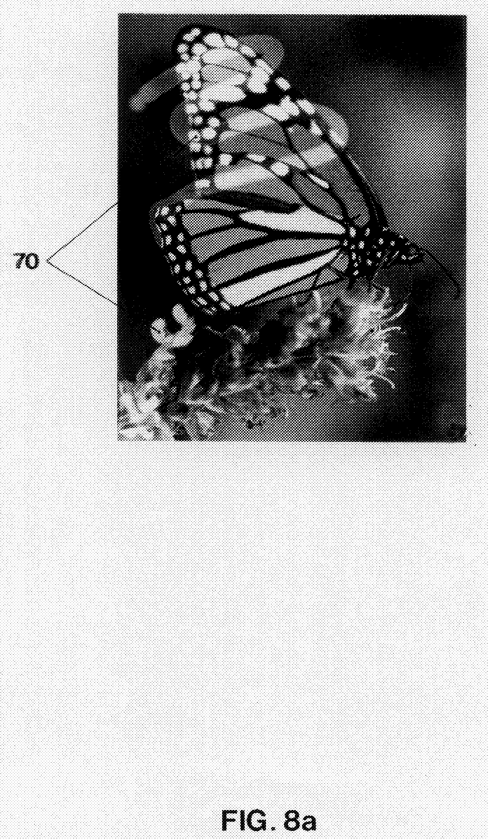

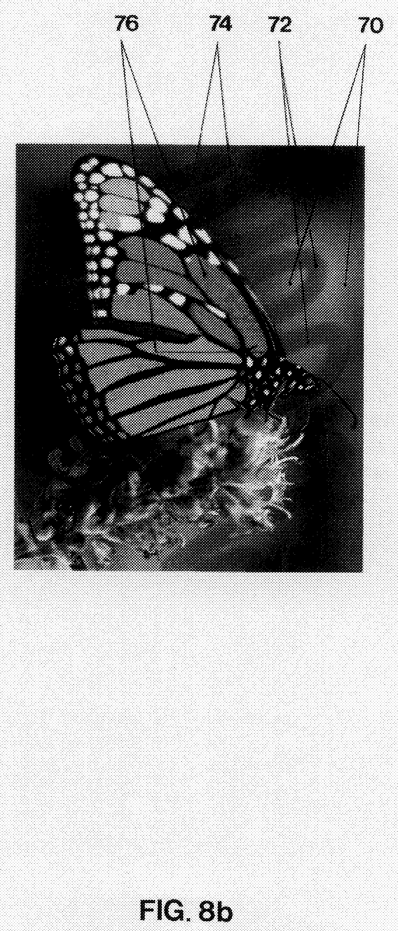

Figs. 8, 8a and 8b illustrate the above two color manipulation functions. Thus, Fig. 8 illustrates the original composite color image. Fig. 8a illustrates the method applied to the original composite image of Fig. 8 for the purpose of changing the color in the areas touched by the brush, as shown at 70, from the original color of each picture element to the gray scale (black to white), according to the specific rules, specified by the manipulatable function, cross-operating between the separations.

Fig. 8b illustrates the original composite picture image of Fig. 8 as manipulated by the described method for the purpose of changing the color in the areas touched by the brush 70 according to the following rules:

original light green to be changed to red (72);

the change to become less pronounced as the green color gets darker (74);

the areas with other original colors, such as white, yellow, orange, brown, not to be changed at all (76); and

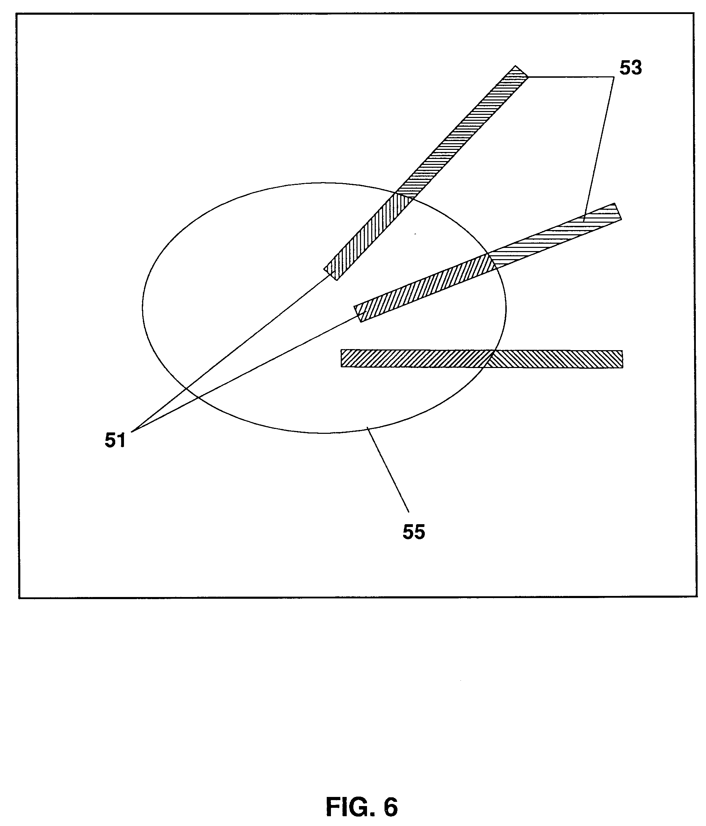

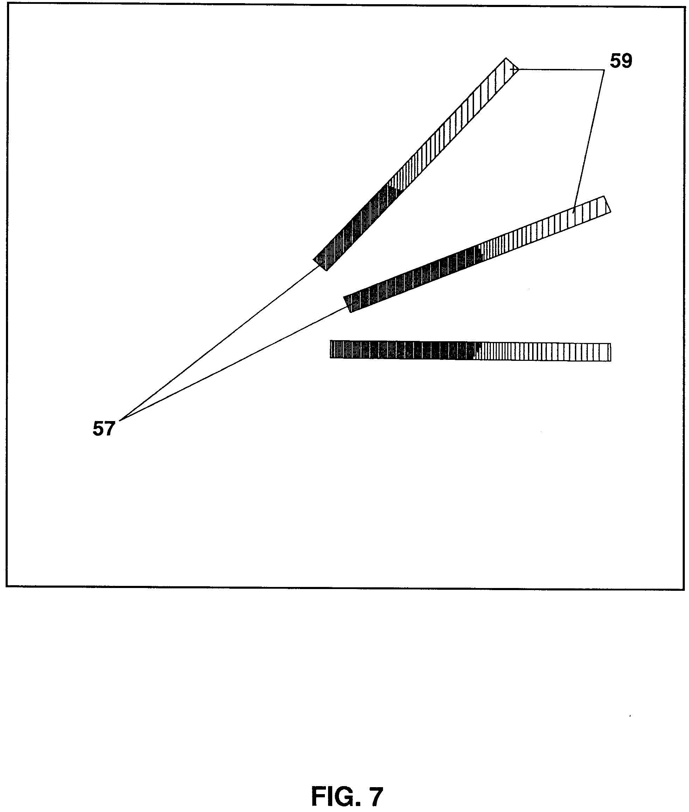

Figs. 6 and 7 illustrate other color manipulation functions which may be selected, in which the above-mentioned dependencies are both in the color space and also in the geometrical placement of the image element in the image.

Fig. 6 illustrates an example of absolute coordinate dependencies. Thus, the output value of the separation depends not only on the color space value of the image element, but also on the absolute coordinates of the image element in the image. As shown in Fig. 6, a sun-like image is created by defining a color manipulation function such that for image elements close to the center 51 of the image, the color change will be maximal, while for image elements furthest from the center 53, having the same color space values, the color change will be minimal. "Close" or "far" can be defined by the image element being inside or outside a given geometric shape (55).

Fig. 7 illustrates an example of relative distance dependencies. In this example, the output value of the separation depends not only on the color space value of the image element, but also or the relative distance of the image element from the beginning of the "brush" stroke. Thus, as shown in Fig. 7, a free hand drawing car be created, wherein the beginning of each "brush" stroke (57) gives darker values than the end of such strokes (59) for equal color space values, with intermediate value in between.

## Claims

1. A method of manipulating a composite color image defined by a plurality of color separation files, by applying a brush to selected points of the composite color image to be manipulated according to a preselected color manipulation function, and modifying the respective point in each color separation file according to said preselected color manipulation function, and also according to inputted characteristics of the brush;

   characterized in that said preselected color manipulation function includes, for each point of the composite color image, the color manipulation functions of each color separation file and the influences of each color separation file on the remaining color separation files; and that each color separation file is modified according to the inputs from all the color separation files, as well as from said preselected manipulation function and said inputted brush characteristics.

2. The method according to Claim 1, wherein said preselected color manipulation function defines a color change function.

3. The method according to Claim 1, wherein said preselected color manipulation function defines a matrix function.

4. The method according to any one of Claims 1-3, wherein said brush is an input device defining said composite color image, and said inputted brush characteristics include the pressure of the input device defining the selected point of the composite color image on said tablet.

5. The method according to any one of Claims 1-4, wherein said brush is a matrix of brush elements, and said inputted brush characteristics include the brush size and shape.

6. The method according to Claim 5, wherein said inputted brush characteristics also include transparency, profile and noise.

7. The method according to any one of Claims 1-6, wherein the separation values outputted by said manipulation also depend on the absolute or relative coordinates of the image elements in the image.

**FIG. 1**

START

CHOOSE AREA
SELECTION (29)

SET BRUSH
PARAMETERS (31)

SELECT COLOR
MANIPULATION
FUNCTION AND (33)
SET PARAMETERS

FOR EACH (35)
COORDINATE PICKED
1 TO N

(37)

FOR EACH PIXEL
P(i,j)
UNDER BRUSH
ELEMENT B(n,m)

(39) READ IN TOTAL COLOR INFORMATION P(i,j)
FOUR COLOR SEPARATIONS

(41) CONVERT TO APPROPRIATE COLOR SPACE

(43) APPLY COLOR MANIPULATION FUNCTION

(45) CONVERT OUTPUT COLOR VALUE BACK INTO
ORIGINAL COLOR SPACE

(47) MERGE OUTPUT COLOR VALUE WITH
THE IMAGE ACCORDING TO B (n,m)

(49) WRITE BACK FOUR COLOR SEPARATIONS

FIG. 2

FIG. 3

P(i,j)

P.CYAN
(i,j)

CYAN

P.MAGENTA
(i,j)

MEGENTA

P.YELLOW
(i,j)

YELLOW

P.BLACK
(i,j)

BLACK

IMAGE ELEMENT P(i,j) SHOWING ALL FOUR SEPARATIONS.

FIG. 4

9

**FIG. 5**

**FIG. 6**

**FIG. 7**

FIG. 8

70

FIG. 8a

FIG. 8b